# EUROPEAN PATENT SPECIFICATION

(11) **EP 1 450 110 B1**
(45) Date of publication and mention of the grant of the patent: **01.02.2012**
(21) Application number: 04003765.7
(22) Date of filing: 19.02.2004
(51) Int. Cl.: F24D 17/00, F24D 17/02, F24D 19/10

(54) **Hot water supply system with storing tank**
Warmwasserversorgungssystem mit Speichertank
Système de distribution d'eau chaude avec réservoir de stockage

(30) Priority: 20.02.2003 JP 2003043155; 27.11.2003 JP 2003397916
(43) Date of publication of application: 25.08.2004
(73) Proprietor: DENSO CORPORATION, Kariya-city, Aichi-pref. 448-8661 (JP)
(72) Inventor: Iwase, Jun, Kariya City Aichi-pref. 448-8661 (JP); Sakakibara, Hisayoshi, Kariya City Aichi-pref. 448-8661 (JP)
(74) Representative: Klingseisen, Franz

(56) References cited:
- DE-C- 19 927 027
- US-A- 4 481 788
- US-A- 5 293 447

## Description

This invention relates to a hot water supply system according to the preamble of claim 1.

As one of conventional systems of this kind, a hot water supply system with storing tanks is known in the art, which is shown in US Patent 6,370,896 (corresponding to Japanese laid-opened publication No. 2000-213806. In this conventional system, heat-pump cycle is operated by electric power of lower electricity rate during night, hot water being generated thereby and stored in the tanks, so that stored hot water is used in the next day.

According to this conventional system, however, when a large amount of hot water is used during the day time, hot water likely come short, in such a case the heat-pump cycle is operated by electric power of normal (higher) electricity rate.

_{U}S-A-5,293,447 discloses a hot water supply system according to the preamble of claim 1, wherein this system uses solar energy for heating water.

It is, accordingly, an object of this invention to provide a hot-water supply system with storing tank(s) being operated by electric power, which is lower in running cost as much as possible.

This object is attained by the characterising features cited in claim 1.

In order to achieve the above obj ect, there are provided with the following means in a system of this invention;
a hot-water generating means (1a) for generating hot water by use of electric power;
a hot-water storing means (1b) for storing hot water generated by the hot-water generating means (1a); and
a control means (15) for controlling the operations of those hot-water generating and storing means, wherein a solar energy generating means (16) is further provided and the control means (15) so controls that hot-water generating means (1a) is operated by the electric power generated by the solar energy generating means (16) and storing the hot water in the hot-water storing means (1b) when the electric power from the solar energy generating means (16) is higher than a predetermined amount.

According to this invention described above, the hot-water generating means (1a) is operated by the electric power generated by the solar energy generating means (16) whenever it is possible during the day time, so that hot water is frequently generated and stored. As a result, the shortage of hot water during the day time is hardly happen, and it is not likely necessary to operate the heat-pump cycle by the electric power of higher electricity rate during the day time. Since the heat-pump cycle is operated during the day time, the time period between the hot water generation and the use of the hot water becomes shorter, which makes it possible to reduce the heat radiation from a surface of the hot-water storing tank(s).

And furthermore, since the hot water is frequently generated and stored during the day time, the amount of water to be heated by the electric power during the nights and stored in a tank (7) is reduced. From those features, it is possible to provide a hot water supply system, which is low in running cost, by making use of the electric power from the solar energy generating means (16).

According to another embodiment of this invention, an additional hot-water storing tank (9) can be provided to the hot-water storing tank (7) in the hot-water storing means (1b), so that hot water can be stored in not only the storing tank (7) but the additional storing tank (9) when the hot water is generated by the electric power from the solar energy generating means (15) under the control of the control means (15).

This is a purpose of storing the hot water as much as possible, when the hot water can be generated during the day time with lower running cost. This feature makes it further unnecessary that the heat-pump cycle must be operated by the electric power of the normal electricity rate in case of the shortage of hot water during the day time. And it likewise makes it possible that the amount of water to be heated by the electric power during the nights and stored in a tank (7) is reduced.

According to a further feature of this invention, the heat-pump cycle is used as a heating means in the hot-water generating means (1a) and a supercritical heat-pump cycle of carbon dioxide as a refrigerant can be used for the heat-pump cycle. According to this feature, a high-temperature hot water can be generated by this heat-pump cycle, in particular by the supercritical heat-pump cycle of the carbon dioxide, and this high-temperature hot water is preferable for the hot-water supply system of higher efficiency of water heat exchangers.
The present invention relates in particular to a hot water supply system having a hot-water storing tank in which hot water generated by electric power is stored, more specifically the hot water bering generated by means of solar energy.
Fig.1 is a schematic diagram of a hot water supply system with a hot-water storing tanks as one of the embodiment of this invention,
Fig.2 is a flow-chart of controlling the system shown in Fig. 1 being controlled by a control unit 15, and
Fig.3 is a schematic diagram showing alternative positions of an electric energy meter 17.

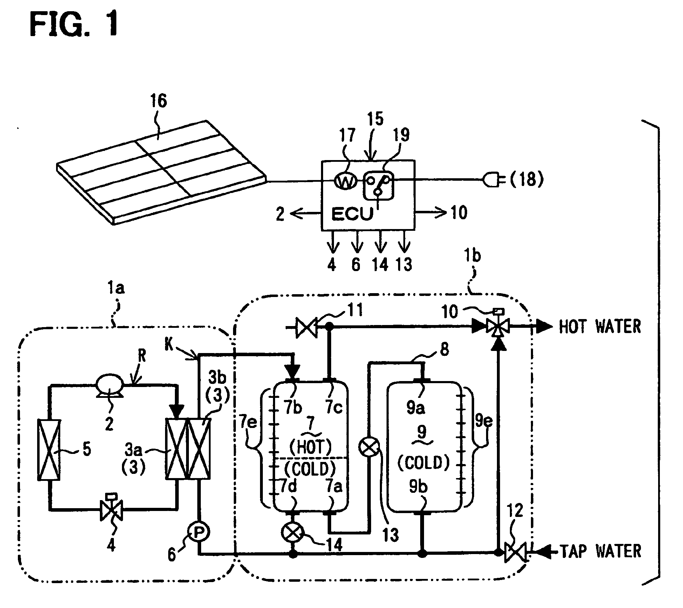

Embodiments of the invention will be described more in detail with reference to the drawings. Fig.1 schematically shows a hot water supply system with a hot water storing tank being operated by the electric power, according to an embodiment of this invention. According to this embodiment, water is heated to a high temperature (90 degrees Celsius) by a supercritical heat-pump cycle and heated hot water is stored in hot-water storing tanks (7 and 9). Then this hot water being stored is mixed with cold water by a temperature control valve (10) , controlled at a desired temperature and supplied to a kitchen, bath and so on.

The supercritical heat-pump cycle (hereinafter referred to as heat pump) means a heat-pump cycle in which a refrigerant pressure on a high-pressure side becomes greater than a critical pressure of the refrigerant and the heat pump in this embodiment is the heat-pump cycle with a refrigerant of carbon dioxide. The hot water supply system is composed of a hot-water supply unit (1a) (hot-water supply means) as a heat-pump system installing parts for a refrigerating cycle as described below, and a tank unit (16) (hot-water storing means) mainly containing hot-water storing tanks (7 and 9).

In the hot-water supply unit (1a), there are provided with a refrigerant circuit (R) of the heat-pump cycle and a water heating circuit (K) for supplying hot water. The refrigerant circuit (R) is composed of a compressor (2) compressing the refrigerant, a water heat exchanger (3) (gas-cooler) for heating water, an expansion valve (4) for decompressing the refrigerant, and an outdoor unit of heat exchanger (evaporator) (5) for absorbing heat from the atmosphere. Those elements are connected in a circuit and carbon dioxide is charged in this circuit as the refrigerant, the critical temperature of which is low.

The compressor (2) is composed of an electric driving motor contained therein (not shown) and a high-pressure compressing mechanism which compresses and brings the sucked refrigerant of gas phase to a high pressure higher than the critical pressure thereof and discharges such high-pressure refrigerant. The electric driving motor and compressing mechanism are housed in a sealed housing (not shown). The water heat exchanger (3) heat exchanges between the high-pressure high-temperature refrigerant pressurized by the high-pressure compressing mechanism and the supply water for heating the supply water. The water heat exchanger (3) is of a counter-flow type, wherein a water-supply passage (3b) is provided adjacent to a high-pressure refrigerant passage (3a) so that flow directions of the refrigerant in the passage (3a) and the supply water in the passage (3b) are opposite to each other.

The expansion valve (4) provided between the water heat exchanger (3) and the outdoor heat exchanger (5) decompresses the refrigerant cooled down at the water heat exchanger (3) from the high pressure to the low pressure and supplies the refrigerant to the outdoor heat exchanger (5). The expansion valve (4) here is electrically controlled by a control unit (15) (described later) so that its opening degree can be changed. A blower fan (not shown) blows air to the outdoor heat exchanger (5) so that the refrigerant decompressed by the expansion valve (4) will be evaporated through the heat exchange with the air. The refrigerant becoming to a gas phase is then sucked by the compressor (2).

The water heating circuit (K) is composed of the above-mentioned water-supply passage (3b), a water pump (6) for circulating the supply water and the (first) hot-water storing tank (7) for storing the supply water, which are connected in a circuit. There are further provided with an additional (second) hot-water storing tank (9) and a connecting pipe (8) for connecting a lower side inlet-outlet portion (7a) of the tank (7) with an upper side inlet-outlet portion (9a) of the second tank (9).

As shown in Fig.1, the water pump (6) circulates in general cold supply water from a cold-water outlet (7d) provided at the lower end of the first tank (7) to a hot-water inlet (7b) provided at the upper end of the first tank (7) through the water-supply passage (3b) of the water heat exchanger (3). The water pump (6) controls the amount of the supply water flowing through the water-supply passage depending on the rotational speed of a driving motor (not shown).

The tanks (7 and 9) are made of anti-corrosive metal (e.g. stainless steel) and constructed as a heat insulating configuration, so that the tanks (7 and 9) keep the hot water at a high temperature for long hours. The hot water stored in the tanks (7 and 9) is mixed with cold tap water and controlled at a desired temperature by a temperature control valve (10), and then used for the household purposes, such as for kitchens and bathes.

Temperature sensors (7e) and (9e) are provided to the tanks (7 and 9) to detect whether the tanks (7 and 9) are filled with hot water or not. For this purpose, multiple sensors (7e and 9e) are provided to the tanks (7 and 9), which are composed of 7 to 10 thermistors and arranged in a vertical direction. The sensors are connected to an electronic control unit (ECU) (15), so that the ECU (15) determines whether the tanks (7 and 9) are filled with hot water or not based on the signals from the sensors (7e and 9e).

A (first) switching valve (13) is provided in the connecting pipe (8) between the tanks (7 and 9) for opening or closing the pipe. A (second) switching valve (14) is provided at a downstream side of the cold-water outlet (7d) of the first tank 7 for opening or closing the water heating circuit (K). In Fig. 1, a reference numeral 11 designates an air relief valve, a reference numeral 12 designates a pressure relief valve for decreasing the water pressure of the tap water. The ECU (15) electronically controls the above-mentioned compressor (2), the expansion valve (4), the water pump (6), the temperature control valve (10), the first switching valve (13), the second switching valve (14) and so on.

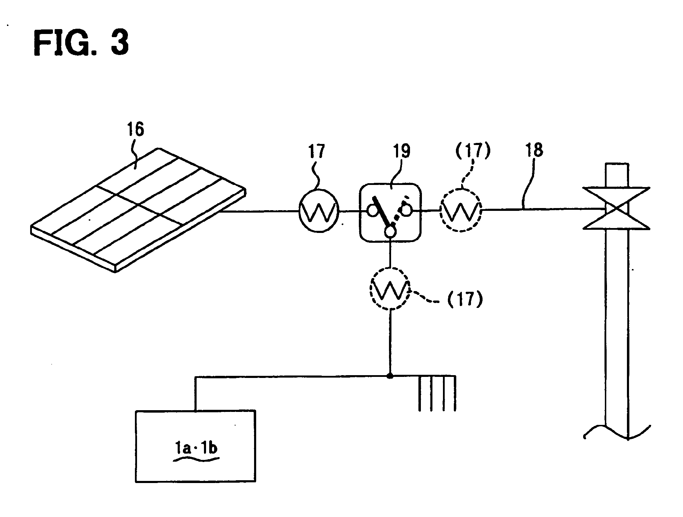

A solar battery unit (16) is provided as a solar energy generating means and the electric power generated at this solar battery unit (16) is supplied to a control unit (15). In the control unit (15), there are provided with an electric energy meter (17) for detecting the electric energy from the solar battery unit (16) and with a switching device (19) for selecting either the electric power from a normal house electricity (18) or the electric power from the solar battery unit (16) so that the selected electric power is supplied to the hot-water generating unit (1a) and the hot-water storing unit (1b). The electric energy meter (17) detects whether the electric power from the solar battery unit (16) is higher than a predetermined amount and can be alternatively connected as indicated by dotted lines in Fig.3.

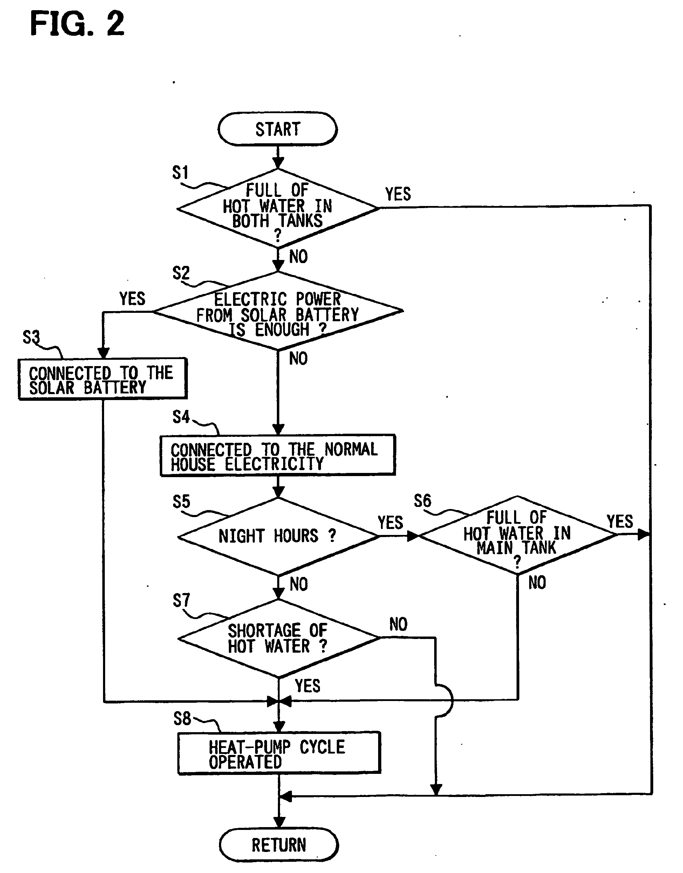

An operation of the above described embodiment will now be explained with reference to Fig.2 showing the flowchart of the operation by the control unit (15). At first, it is determined at the first step (S1) whether both of the tanks (7 & 9) are filled with the hot water, based on signals from sensors (7e and 9e) provided on the storing tanks (7 and 9) . When the tanks (7 and 9) are fully filled with hot water, the hot-water generating unit (1a) is not operated and this detection is periodically made until the control unit (15) detects that there is a shortage of hot water either in one of the tanks (7 and 9). When it is determined that there is the shortage of hot water, then the process goes on to the next step (S2).

At the step (S2), the control unit (15) determines whether the electric power from the solar battery unit (16) is higher than the predetermined amount. When it is the case, i.e. the electric power from the solar battery unit (16) is sufficiently enough to drive the hot-water generating unit (1a), the process goes on to the step (S3) . At the step (S3), the switching device (19) switches over to the solar battery unit (16) so that the electric power from the solar battery unit (16) is supplied to the hot-water generating unit (1a) and the tank unit (1b). The process goes on to the step (S8), at which the hot-water generating unit (1a) is operated to generate hot water so as to fill the tank unit (1b) with hot water.

In this operation of storing hot water by the electric power from the solar battery unit (16), when the electric energy from the solar battery unit (16) is furthermore enough to drive the hot-water generating unit (1a) even after the first storing tank (7) has been fully filled with hot water, the second storing tank (9) is connected in series to the first storing tank (7) to enlarge a storing capacity for hot water, and the hot water storing operation will be continued. Namely, the first switching valve (13) is opened, while the second switching valve (14) is closed, so that the first and second tanks (7 and 9) are connected in series to enlarge the storing capacity. As above, in case there is a shortage of hot water at the step (S1) and the electric power from the solar battery unit is enough to drive the hot-water generating unit (1a) at the step (S2), the operation of storing hot water is done.

When the hot water flows out of the hot-water storing unit (1b) and the hot water stored in the tank (7) decreases and when it is detected by the control unit (15) that there is the shortage of hot water in the tank (7) based on the signal from the sensor (not shown), namely cold water is filled in the lower portion of the tank (9) , the first switching valve (13) is closed and the second switching valve (14) is opened so that the second storing tank (9) is separated from the water heating circuit (K). Then the water heating circuit operates in a normal condition, in which the cold water flows into or out of the first tank (9) through the cold-water inlet portion (7d).

In case it is determined at the step (S2) that the electric power from the solar battery unit (16) is lower than the predetermined amount, i.e. the electric power from the solar battery unit (16) is not sufficiently enough to drive the hot-water generating unit (1a), the process goes on to the step (S4). At the step (S4), the switching device (19) switches over to the normal house electricity. The process goes on to the step (S5), at which it is determined whether it is a time for night electricity or not. And when the night time is detected at this step (S5), then the process goes to the step (S6).

At the step (S6), it is determined whether the first (main) tank (7) is fully filled with hot water or not. Since in the operation mode of the hot-water storing during night time, the hot-water generating unit (1a) is so operated that the first tank (7) alone is filled with hot water, in case of "NO" at the step (S6), i.e. in case there is a shortage of hot water in the first tank (7), the process goes on to the step (S8), at which the hot-water generating unit (1a) is operated by the electric power of lower cost during the night time. When the determination at the step (S6) becomes "YES", namely when the first tank (7) is fully filled with hot water, the operation of the hot-water generating unit (1a) is stopped.

At the step (S5), when the determination is "NO", i.e. it is determined that it is the day time, then the process goes to the step (S7). At this step (S7), it is determined whether the first tank (7) is fully filled with hot water or not, based on the signal from the sensor (not shown) provided at the storing tank (7). When the determination at this step is "YES", i.e. when there is a shortage of hot water in the tank (7), the process goes on to the step (S8), at which the hot-water generating unit (1a) will be operated even when the electricity rate is normal during the day time.

A warning for the shortage of the hot water is generally made when the amount of the hot water in the first tank (7) becomes lower than a predetermined amount. And therefore, when the tank (7) is filled with hot water, the amount of which exceeds the predetermined amount, the warning is removed and the operation of the hot-water generating unit (1a) is stopped.

As explained above with reference to the embodiment of the invention, the solar battery unit (16) is provided and the control unit (15) so controls that the hot-water generating unit (1a) is operated by the electric power from the solar battery unit (16) whentheelectricenergyofthesolarbatteryunit (16) issufficiently enough to operate the hot-water generating unit (1a), to generate hot water and store the hot water in the hot-water storing unit (1b). Accordingly, the hot-water generating unit (1a) is operated by the electric energy from the solar battery unit (16) during the day time as long as possible, and hot water is frequently generated and stored.

Therefore, it is mostly avoided to operate the heat-pump cycle by the electric power of normal electricity charge, even when there occurs a shortage of hot water during the day time. Furthermore, the heat-pump cycle is operated by the electric power of the solar battery unit during the daytime, resulting in that the time period between the hot water generation and the use of the hot water becomes shorter, which makes it possible to reduce the heat radiation from a surface of the hot-water storing tanks. Furthermore, since the hot water is frequently generated and stored during the day time, the amount of water to be heated by the electric power and stored in the tank (7) during the nights is reduced. As a result of the above mentioned features, the hot water supply system of low in running cost is obtained, by making use of the electric power of the solar battery unit (16).

On the other hand, the second tank (9) is additionally provided to the main tank (7) in the hot-water storing unit (1b) and the control unit (15) so controls that hot water will be stored in the second tank (9) after the main tank (7) is filled with hot water, whentheelectricenergyofthesolarbatteryunit (16) is sufficiently enough to operate the hot-water generating unit.

This is aiming that the hot water is stored as much as possible, when the hot water can be generated by the electric power without the running cost during the day time. It can avoid a necessity for operating the heat-pump cycle with cost during the day time even when a shortage of hot water occurs, and it can further reduce the amount of water to be heated and stored in the tank (7) during the night.

The heat-pump cycle is adopted as a heating means in the hot-water generating unit (1a), and furthermore the supercritical heat-pump cycle operating with carbon dioxide as the refrigerant is adopted. This is because that the heat-pump cycle, in particular the supercritical heat-pump cycle of the carbon dioxide is preferable to be used in the hot-water supply system.

This invention shall not be limited to the embodiment described in the foregoing paragraphs, the scope of the invention is defined by the claims. In further embodiments, the electric energy is directly supplied from the solar battery unit (16) to the control unit (15) in the above mentioned embodiment, however, a battery can be interposed therebetween so that the electric energy is charged and stored in the battery and such charged electric energy can be supplied to the control unit (15). In the above mentioned embodiment, the additional (second) tank (9) is provided, however, the main tank (7) can be made larger in relation to the power of the solar battery unit (16), and furthermore, the amount of water to be heated by the electric energy from the solar battery unit and the amount of water to be heated by the electric power of the house electricity during the night can be changeable.

As the amount of hot water necessary for a day differs in each house, it is not always necessary to fully fill the first tank with hot water at the step S6. It can be possible to make changeable the amount of hot water to be stored in the second tank (9). The supercritical heat-pump cycle of the carbon dioxide is adopted as a refrigerating cycle for heating supply-water in the above mentioned embodiment, however, other materials, such as ethylene, ethane, nitrogen dioxide, etc. can be used as a refrigerant. Furthermore, a conventional refrigerating cycle of Freon can be adopted here.

## Claims

1. A hot water supply system for supplying hot water having,
a hot-water generating unit (1a) for generating hot water by the electric power;
a hot-water storing unit (1b) for storing hot water generated by said hot-water generating unit (1a); and
a control unit (15) for controlling the operations of said units (1 a and 1 b), wherein the hot-water supply system further comprises a solar battery unit (16); and wherein
said control unit (15) controls said units (1a and 1b) such that said hot-water generating unit (1a) is operated by the electric power from said solar battery unit (16) when the electric energy of said solar battery unit (16) is higher than a predetermined value, and the hot water so generated is stored in the hot-water storing unit (1b),
**characterized in that**
a heat-pump cycle is adopted as a heating means in said hot-water generating unit (1a).

2. A hot-water supply system according to Claim 1, wherein said hot-water storing unit (1b) comprises:
a first storing tank (7); and
a second storing tank (9),
wherein said control unit (15) so controls that said second storing tank (9) is connected to said first storing tank (7) so as to store hot water in said second storing tank (9) when said first storing tank (8) is fully filled with hot water, during such a period in which hot water is generated at said hot-water generating unit (1a) by the electric power from said solar battery unit (16).

3. A hot-water supply system according to Claim 1, wherein a supercritical heat-pump cycle operating with carbon dioxide is adopted as the heat-pump cycle.

## Patentansprüche

1. Heißwasserzuführsystem zum Zuführen von heißem Wasser, umfassend
eine Heißwassererzeugungseinheit (1a) zum Erzeugen von Heißwasser durch die elektrische Leistung;
eine Heißwasserspeichereinheit (1 b) zum Speichern von Heißwasser, welches durch die Heißwassererzeugungseinheit (1a) erzeugt wurde; und
eine Steuereinheit (15) zum Steuern der Arbeitsvorgänge der Einheiten (1a und 1b),
wobei das Heißwasserzuführsystem ferner eine Solarbatterieeinheit (16) umfasst; und wobei
die Steuereinheit (15) die Einheiten (1a und 1b) derart steuert, dass die Heißwassererzeugungseinheit (1a) durch die elektrische Leistung von der Solarbatterieeinheit (16) betrieben wird, wenn die elektrische Energie der Solarbatterieeinheit (16) höher als ein vorbestimmter Wert ist, und das so erzeugte Heißwasser, in der Heißwasserspeichereinheit (1b) gespeichert wird,
**dadurch gekennzeichnet, dass**
ein Wärmepumpenkreis als eine Heizeinrichtung in der Heißwassererzeugungseinheit (1a) angewendet ist.

2. Heißwasserzuführsystem nach Anspruch 1, wobei die Heißwasserspeichereinheit (1 b) umfasst:
einen ersten Speichertank (7); und
einen zweiten Speichertank (9),
wobei die Speichereinheit (15) dahingehend steuert, dass der zweite Speichertank (9) mit dem ersten Speichertank (7) derart verbunden ist, dass Heißwasser in dem zweiten Speichertank (9) gespeichert wird, wenn der erste Speichertank (8) vollständig mit Heißwasser gefüllt ist, dies während solch einer Zeitperiode, in welcher Heißwasser an der Heißwassererzeugungseinheit (1a) durch die elektrische Leistung von der Solarbatterieeinheit (16) erzeugt wird.

3. Heißwasserzuführsystem nach Anspruch 1, wobei ein superkritischer Wärmepumpenkreis, welcher mit Kohlendioxid arbeitet, als der Wärmepumpenkreis angewandt ist.

## Revendications

1. Système de distribution d'eau chaude pour distribuer de l'eau chaude, comprenant
une unité (1a) génératrice de l'eau chaude pour générer de l'eau chaude par l'électricité;
une unité (1b) de stockage de l'eau chaude pour stocker de l'eau chaude générée par l'unité (1a) génératrice de l'eau chaude, et
une unité de commande (15) pour commander le fonctionnement des unités (1a et 1b), le système de distribution d'eau chaude comprenant de plus une unité de pile solaire (16); et
l'unité de commande (15) commandant les unités (1a et 1b) afin que l'unité (1a) génératrice de l'eau chaude soit fait fonctionnée par l'électricité de l'unité de pile solaire (16) quand l'électricité de la pile solaire (16) est plus haute qu'une valeur prédéterminée, et l'eau chaude générée de cette façon soit stockée dans l'unité (1b) de stockage de l'eau chaude,
**caractérisé en ce qu'**
un cycle de pompe à chaleur est adopté comme moyen de chauffage dans l'unité (1a) génératrice de l'eau chaude.

2. Système de distribution d'eau chaude selon la revendication 1, l'unité (1b) de stockage de l'eau chaude comprenant:
un premier réservoir de stockage (7) et
un deuxième réservoir de stockage (9),
l'unité de commande (15) commandant afin que le deuxième réservoir de stockage (9) soit raccordé au premier réservoir de stockage (7) pour stocker de l'eau chaude dans le deuxième réservoir de stockage (9) quand le premier réservoir de stockage (7) est complètement rempli avec de l'eau chaude, pendant une telle période dans laquelle de l'eau chaude est générée à l'unité (1a) génératrice de l'eau chaude par l'électricité de l'unité de pile solaire (16).

3. Système de distribution d'eau chaude selon la revendication 1, dans lequel un cycle de pompe à chaleur fonctionnant au dioxide de carbone est adopté comme le cycle de pompe à chaleur.
